# EUROPEAN PATENT APPLICATION

(11) **EP 4 801 022 A1**
(43) Date of publication of application: **02.09.2026**
(21) Application number: 26152432.6
(22) Date of filing: 16.01.2026
(51) Int. Cl.: H04M 9/08

(54) **ECHO SUPPRESSOR FOR USE IN TWO-WAY VOICE COMMUNICATION**

(30) Priority: 28.02.2025 DK PA202530128
(71) Applicant: GN Hearing A/S, 2750 Ballerup (DK)
(72) Inventor: Ho, Evan Wei Li, Frederiksberg (DK); Mowlaee, Pejman, Ballerup (DK); Rung, Martin, 2700 Brønshøj (DK)
(74) Representative: GN Store Nord A/S

(57) **Abstract**

An echo suppressor (10) for use in two-way voice communication through a communication network (4) in a scenario wherein near-end speech (SN) from a local user (1) is picked up by a microphone (8) for transmission to a remote participant (6) and far-end speech (RX) received from the remote participant (6) is reproduced for the local user (1) by a loudspeaker (7).

The echo suppressor comprises:
- a reference input (11) for receiving a first reference signal (R1) representative of far-end speech (RX) from the communication network (4);
- a microphone input (12) for receiving a first microphone signal (M1) from the microphone (8) comprising a near-end speech portion representative of near-end speech (SN) from the local user (1) and an echo portion representative of direct and/or indirect acoustic feedback (SE) of far-end speech (SF) from the loudspeaker (7) to the microphone (8);
- a first double-talk detector (13) configured to estimate a first double-talk likelihood (L1) being a likelihood of simultaneous presence of near-end speech and far-end speech in the first microphone signal (M1) and to provide a first double-talk signal (D1) indicating the first double-talk likelihood (L1);
- a first echo reduction block (14) connected to receive a second reference signal (R2) equal to or derived from the first reference signal (R1), a second microphone signal (M2) equal to or derived from the first microphone signal (M1), and the first double-talk signal (D1), wherein the first echo reduction block (14) is configured to adaptively process the second microphone signal (M2) based on the second reference signal (R2) to estimate a first echo-cancelled signal (C1), and wherein the first echo reduction block (14) is further configured to control the processing of the second microphone signal (M2) in dependence on the first double-talk likelihood (L1); and
- a near-end speech output (15) connected to receive a first echo-suppressed signal (S1) equal to or derived from the first echo-cancelled signal (C1), wherein the near-end speech output (15) is configured to provide a near-end speech signal (TX) comprising near-end speech for transmission to the communication network (4) based on the first echo-suppressed signal (S1).

The echo suppressor (10) is characterized in that:
- the echo suppressor (10) is configured to estimate a third microphone signal (M3) based on the first microphone signal (M1) and the first reference signal (R1); and
- the first double-talk detector (13) is connected to receive the third microphone signal (M3) and is further configured to estimate the first double-talk likelihood (L1) in dependence on the first reference signal (R1) and the third microphone signal (M3).

By estimating the double-talk likelihood (L1) in dependence on the third microphone signal (M3) wherein, preferably, the echo portion is reduced relative to the near-end speech portion when compared with the first microphone signal (M1), the first double-talk detector (13) may estimate the first double-talk likelihood (L1) with better accuracy and/or reliability and thereby enable the first echo reduction block (14) and the echo suppressor (10) to further reduce the echo portion relative to the near-end speech portion in the near-end speech signal (TX).

## Description

The present disclosure relates to an echo suppressor for use in two-way voice communication through a communication network. The echo suppressor may be used in audio communication devices, such as speakerphones and soundbars.

### BACKGROUND

In two-way voice communication scenarios, a local user is often situated in a room with a speakerphone that is connected to exchange voice communication signals through a communication network with, e.g., a mobile phone of a remote participant. The speakerphone typically comprises a loudspeaker arranged to emit sound comprising far-end speech received from the remote participant for the local user to hear. The speakerphone typically further comprises a microphone arranged to pick up sound from the room comprising near-end speech from the local user as well as direct and/or indirect acoustic feedback of far-end speech from the loudspeaker to the microphone.

The acoustic feedback typically comprises both direct feedback, early echoes caused by early reflections of sound off walls, ceiling, and other objects in the room, and reverberation which is the term typically used for the later arriving diffuse mixture of repeatedly reflected or scattered sound waves.

The use of echo suppressors, such as acoustic echo cancellers (AEC), to suppress acoustic feedback contained in the output of the microphone and thus provide clean (or cleaner) near-end speech to the remote participant is well known in the art.

US 2005/0129225 A1 discloses an echo canceler circuit with a double talk activity probability data generator and an echo canceler stage. The double talk activity probability data generator receives pre-echo canceler uplink data and post-echo canceler uplink data, and in response produces double talk activity probability data. The echo canceler stage receives downlink data, pre-echo canceler uplink data and the double talk activity probability data, and in response produces attenuated uplink data

Prior art echo suppressors still leave room for improvement, particularly with respect to the accuracy of detecting double-talk that may impede adaptation of filters used in acoustic echo cancellers and other echo suppressors.

### DISCLOSURE OF INVENTION

It is an object of the present invention to provide an improved echo suppressor without some of the drawbacks of prior art echo suppressors.

This and other objects of the invention are achieved by the invention defined in the independent claims and further explained in the following description. Further objects of the invention are achieved by embodiments defined in the dependent claims and in the detailed description of the invention.

Within this document, the singular forms "a", "an", and "the" specify the presence of a respective entity, such as a feature, an operation, an element, or a component, but do not preclude the presence or addition of further entities. Likewise, the words "have", "include" and "comprise" specify the presence of respective entities, but do not preclude the presence or addition of further entities. The term "and/or" specifies the presence of one or more of the associated entities.

Furthermore, terms like "a first entity", "a second entity" and "a third entity" refer to specific embodiments of such an "entity" to enable a reader to easily distinguish such entities from each other. Unless otherwise stated, the mere mention of a second such entity shall not imply the presence of a first such entity, and the mere mention of a third such entity shall not imply the presence of any of a first such entity and a second such entity.

### BRIEF DESCRIPTION OF THE DRAWINGS

The invention is explained in more detail below together with preferred embodiments and with reference to the drawings in which:
FIG. 1 illustrates a two-way voice communication scenario,
FIG. 2 shows a first embodiment of an echo suppressor,
FIG. 3 shows a second embodiment of an echo suppressor,
FIG. 4 shows a third embodiment of an echo suppressor,
FIG. 5 shows an embodiment of an echo reduction block,
FIGs. 6a and 6b show embodiments of a residual echo suppressor, and
FIGs. 7a and 7b show embodiments of an echo canceller.

### DETAILED DESCRIPTION

Various example embodiments and details are described hereinafter, with reference to the figures when relevant. The figures may or may not be drawn to scale, and elements of similar structures or functions are represented by like reference numerals throughout the figures. Also, the figures are only intended to facilitate understanding of the description of the embodiments; they are not intended as an exhaustive depiction of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

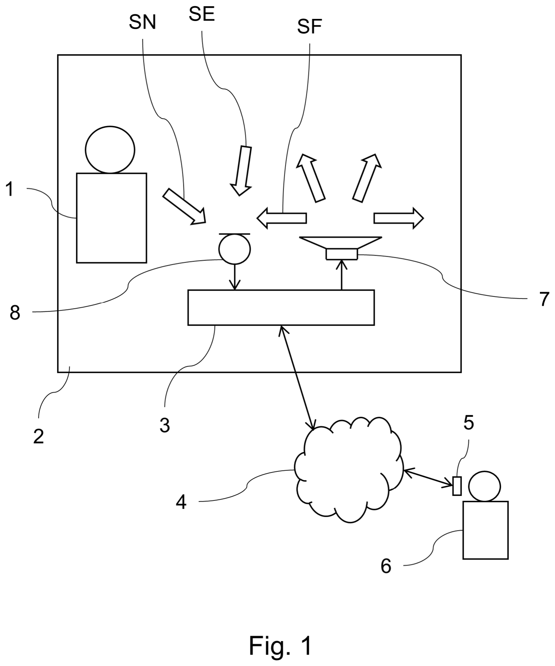

In the two-way voice communication scenario shown in FIG. 1, a local user 1 is situated in a room 2 with a speakerphone 3 that is connected to exchange voice communication signals through a communication network 4 with a mobile phone 5 of a remote participant 6. The speakerphone 3 comprises a loudspeaker 7 arranged to emit sound SF comprising far-end speech received from the remote participant 6 for the local user 1 to hear. The speakerphone 3 further comprises a microphone 8 arranged to pick up sound from the room 2 comprising near-end speech SN from the local user 1 as well as direct and/or indirect acoustic feedback SE of far-end speech SF from the loudspeaker 7 to the microphone 8.

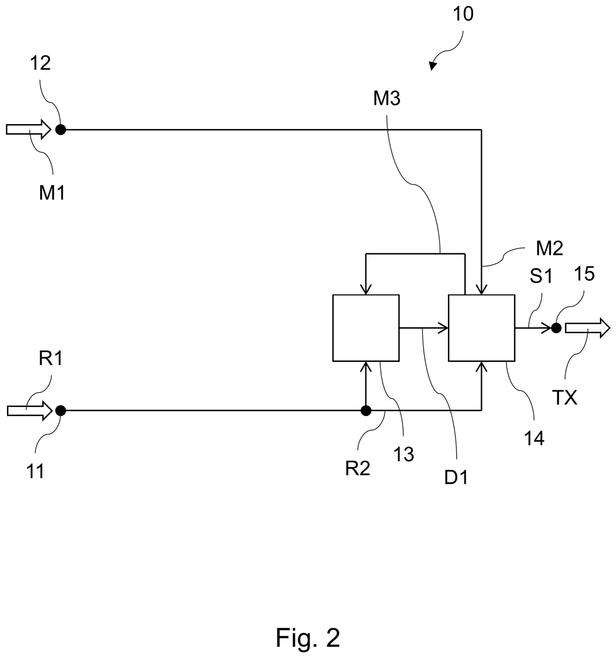

The echo suppressor 10 shown in FIG. 2 may be used in a two-way voice communication scenario, such as the scenario shown in FIG. 1. The echo suppressor 10 may help reducing the amount of fed back far-end speech SF appearing in voice communication signals sent from a local user 1 to a remote participant 6.

The echo suppressor 10 comprises a reference input 11, a microphone input 12, a first double-talk detector 13, a first echo reduction block 14, and a near-end speech output 15.

The reference input 11 may be connected to a communication network 4 for receiving a first reference signal R1 representative of far-end speech RX.

The echo suppressor 10 may, e.g., be comprised by, implemented in, or embedded in, or otherwise be connected to, a first audio gateway device, such as the speakerphone 3 shown in FIG. 1. In such embodiments, the first audio gateway device 3 is preferably connected to receive a network output signal (not shown) representative of far-end speech RX from the communication network 4 and is preferably configured to provide the first reference signal R1 to the echo suppressor 10 based on the network output signal and to provide a loudspeaker signal (not shown) to the loudspeaker 7 of the first audio gateway device 3 based on the network output signal, and the loudspeaker 7 of the first audio gateway device 3 is preferably configured to convert the loudspeaker signal into sound SF for the local user 1 to hear.

The microphone input 12 may be connected to a microphone 8 for receiving a first microphone signal M1 comprising a near-end speech portion representative of near-end speech SN from a local user 1 and an echo portion representative of direct and/or indirect acoustic feedback SE of far-end speech SF from a loudspeaker 7 to the microphone 8.

In embodiments wherein the echo suppressor 10 is comprised by, implemented in, or embedded in, or otherwise connected to, the first audio gateway device 3, the first audio gateway device 3 is preferably configured to provide the first microphone signal M1 based on an output signal of the microphone 8 of the first audio gateway device 3.

The first double-talk detector 13 is configured to estimate a first double-talk likelihood L1 (not shown) being a likelihood of simultaneous presence of near-end speech and far-end speech in the first microphone signal M1 and provide a first double-talk signal D1 indicating the first double-talk likelihood L1.

A first effective processing delay is defined as the time it takes for an onset of double-talk in the first microphone signal M1 to be indicated in the first double-talk signal D1. The first effective processing delay may comprise inherent processing delays and/or deliberate delays achieved by one or more buffers and/or delay lines.

The first echo reduction block 14 is connected to receive a second reference signal R2, a second microphone signal M2, and the first double-talk signal D1. The second reference signal R2 is equal to the first reference signal R1 or is a signal derived therefrom, such as by filtering, delaying, or the like. The second microphone signal M2 is equal to the first microphone signal M1 or is a signal derived therefrom, such as by filtering, delaying, or the like.

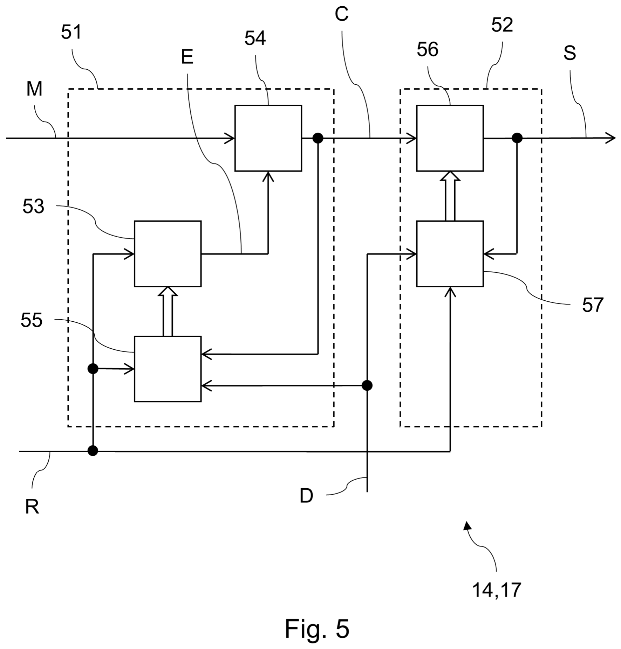

The first echo reduction block 14 is configured to adaptively process the second microphone signal M2 based on the second reference signal R2 to estimate a first echo-cancelled signal C1 (not shown, corresponds to C in FIG. 5). The first echo reduction block 14 may preferably be configured to estimate the first echo-cancelled signal C1 in a manner suitable for reducing the echo portion in the first echo-cancelled signal C1 relative to the near-end speech portion when compared with the second microphone signal M2. The first echo reduction block 14 is further configured to control the processing of the second microphone signal M2 in dependence on the first double-talk likelihood L1 indicated in the first double-talk signal D1.

The first echo reduction block 14 may preferable be configured to halt or slow down adaptation of the processing of the second microphone signal M2 in dependence on an increase of the first double-talk likelihood L1, e.g., to prevent divergence of the adaptation in time periods wherein near-end speech SN from the local user 1 may obscure the acoustic feedback SE. Conversely, the first echo reduction block 14 may be configured to resume or speed up adaptation of the processing of the second microphone signal M2 in dependence on a decrease of the first double-talk likelihood L1.

The near-end speech output 15 is connected to receive a first echo-suppressed signal S1. The first echo-suppressed signal S1 is equal to the first echo-cancelled signal C1 or is a signal derived therefrom, such as by filtering, delaying, or the like.

The near-end speech output 15 is configured to provide a near-end speech signal TX comprising near-end speech based on the first echo-suppressed signal S1. The near-end speech output 15 may be connected to a communication network 4 for transmission of the near-end speech signal TX thereto.

In embodiments wherein the echo suppressor 10 is comprised by, implemented in, or embedded in, or otherwise connected to, the first audio gateway device 3, the first audio gateway device 3 is preferably connected to receive the near-end speech signal TX and configured to provide a network input signal (not shown) based on the near-end speech signal TX to the communication network 4.

The echo suppressor 10 is configured to estimate a third microphone signal M3 based on the first microphone signal M1 and the first reference signal R1., The echo suppressor 10 may preferably be configured to estimate the third microphone signal M3 in a manner suitable for reducing the echo portion in the third microphone signal M3 relative to the near-end speech portion when compared with the first microphone signal M1.

The first double-talk detector 13 is connected to receive the third microphone signal M3 and is further configured to estimate the first double-talk likelihood L1 in dependence on the first reference signal R1 and the third microphone signal M3.

By estimating the first double-talk likelihood L1 in dependence on the third microphone signal M3 wherein, preferably, the echo portion is reduced relative to the near-end speech portion when compared with the first microphone signal M1, the first double-talk detector 13 may estimate the first double-talk likelihood L1 with better accuracy and/or reliability and thereby enable the first echo reduction block 14 and the echo suppressor 10 to further reduce the echo portion relative to the near-end speech portion in the near-end speech signal TX.

Connections between respectively the reference input 11 and a communication network 4, the microphone input 12 and a microphone 8, and the near-end speech output 15 and a communication network 4, may each be made using wired or wireless, fixed, temporary, or separable, audio connections - or combinations hereof, and may each further involve intermediate audio devices, such as audio gateway devices, audio transmitters, audio receivers, or the like.

In embodiments wherein the echo suppressor 10 is comprised by, implemented in, or embedded in, or otherwise connected to, the first audio gateway device 3, such connections may involve respective portions of circuits of the first audio gateway device 3.

In the echo suppressor 10 shown in FIG. 2, the first echo reduction block 14 is configured to provide the third microphone signal M3 based on the first echo-cancelled signal C1 and/or the first echo-suppressed signal S1, e.g., as explained further below in the description of FIGs. 5, 6a, 6b, 7a and 7b. The third microphone signal M3 may thus be equal to - or be derived from - the first echo-cancelled signal C1 and/or the first echo-suppressed signal S1. In this embodiment, the first double-talk detector 13 thereby provides the first double-talk signal D1 in dependence on the first reference signal R1 and at least one of the first echo-cancelled signal C1 and the first echo-suppressed signal S1.

The output D1 of the first double-talk detector 13, i.e., the first double-talk signal D1, is thus both dependent on an output of the first echo reduction block 14 and provided as an input to the first echo reduction block 14 for providing the output of the first echo reduction block 14, which makes the first double-talk signal D1 recursively dependent on itself. This means that an onset of double-talk in the first microphone signal M1 will not be indicated in the first double-talk signal D1 before the first microphone signal M1 has first been processed by the first echo reduction block 14 and subsequently analysed by the first double-talk detector 13, which causes an inherent processing delay of the first double-talk signal D1.

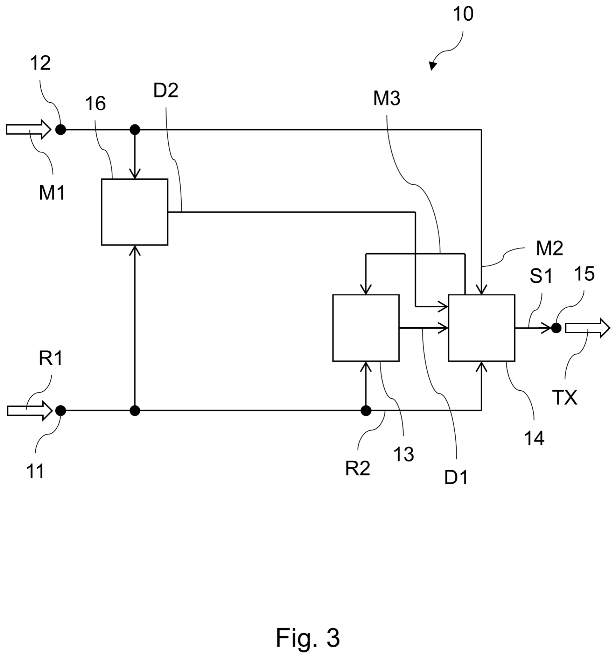

The echo suppressor 10 shown in FIG. 3 comprises all the components of the echo suppressor 10 shown in FIG. 2, and the corresponding description above applies to the echo suppressor 10 shown in FIG. 3, except for the differences stated below.

The echo suppressor 10 shown in FIG. 3 further comprises a second double-talk detector 16 connected to receive the first reference signal R1 and the first microphone signal M1.

The second double-talk detector 16 is configured to estimate a second double-talk likelihood L2 (not shown) being a likelihood of simultaneous presence of near-end speech and far-end speech in the first microphone signal M1, based on the first reference signal R1 and the first microphone signal M1, and to provide a second double-talk signal D2 indicating the second double-talk likelihood L2.

A second effective processing delay is defined as the time it takes for an onset of double-talk in the first microphone signal M1 to be indicated in the second double-talk signal D2. The second effective processing delay may comprise inherent processing delays and/or deliberate delays achieved by one or more buffers or delay lines.

The first echo reduction block 14 is further configured to control the processing of the second microphone signal M2 in further dependence on the second double-talk likelihood L2 indicated in the second double-talk signal D2.

The first echo reduction block 14 may preferable be configured to halt or slow down adaptation of the processing of the second microphone signal M2 in dependence on an increase of the first double-talk likelihood L1 and/or the second double-talk likelihood L2, e.g., to prevent divergence of the adaptation in time periods wherein near-end speech SN from the local user 1 may obscure the acoustic feedback SE. Conversely, the first echo reduction block 14 may be configured to resume or speed up adaptation of the processing of the second microphone signal M2 in dependence on a decrease of the first double-talk likelihood L1 and/or the second double-talk likelihood L2.

The echo suppressor 10 is further configured such that the first effective processing delay is larger than the second effective processing delay. Where this is not achieved by inherent processing delays, deliberate delays may be achieved by one or more buffers and/or delay lines in the signal path from the first microphone signal M1 to the first double-talk signal D1.

The second double-talk detector 16 may provide its output D2 faster, thus reducing the second effective processing delay, when its input signals R1, M1 are not subject to a delay, e.g., by an echo reduction block or other circuits suitable for cancelling, reducing or suppressing the echo portion.

Controlling the processing of the second microphone signal M2 in dependence on both the first double-talk likelihood L1 and the faster second double-talk likelihood L2 may enable the first echo reduction block 14 and the echo suppressor 10 to further reduce the echo portion relative to the near-end speech portion in the near-end speech signal TX. The processing in the first echo reduction block 14 may, e.g., depend on the second double-talk likelihood L2 at the onset of near-end speech in the second microphone signal M2, since at this time, the first double-talk likelihood L1 may be less accurate due to the first effective processing delay, and after a period corresponding to the first effective processing delay depend on the first double-talk likelihood L1.

The first double-talk detector 13 and/or the second double-talk detector 16 of any embodiment of the echo suppressor 10 disclosed herein may be configured to indicate the respective likelihood L1, L2 with arbitrary resolution, depending on the desired response to the indication. In some embodiments, the first and/or second double-talk likelihood L1, L2 may be indicated as an indication switching between 0 and 1, and in other embodiments as an indication switching between e.g. 4, 8, 16, 32 or even more different likelihood levels. In the latter case, the first echo reduction block 14 may be configured to apply different speeds of adaptation of the processing of the respective second microphone signal M2 in dependence on different levels of the first and/or second double-talk likelihood L1, L2.

The first double-talk detector 13 and/or the second double-talk detector 16 of any embodiment of the echo suppressor 10 disclosed herein may be configured to determine the respective likelihood L1, L2 using any suitable double-talk detection algorithm known in the prior art, including applying known algorithms for Voice Activity Detection (VAD) to each of their respective input signals and subsequently comparing the results.

In the echo suppressors 10 shown in FIG. 2 and FIG. 3, the first double-talk detector 13 may further be configured to estimate a first double-talk confidence F1 (not shown) being a confidence of the first double-talk likelihood L1 and indicate the first double-talk confidence F1 in the first double-talk signal D1, and the first echo reduction block 14 may further be configured to control the processing of the second microphone signal M2 in further dependence on the first double-talk confidence F1.

In addition, or alternatively, the second double-talk detector 16 may further be configured to estimate a second double-talk confidence F2 (not shown) being a confidence of the second double-talk likelihood L2 and indicate the second double-talk confidence F2 in the second double-talk signal D2, and the first echo reduction block 14 may further be configured to control the processing of the second microphone signal M2 in further dependence on the second double-talk confidence F2.

Controlling the processing of the second microphone signal M2 in dependence on the first double-talk confidence F1 and/or the second double-talk confidence F2 may enable the first echo reduction block 14 and the echo suppressor 10 to further reduce the echo portion relative to the near-end speech portion in the near-end speech signal TX, e.g. by ignoring an indication of a decrease of double-talk likelihood L1, L2, and thus refrain from resuming or speeding up adaptation, when the respective double-talk confidence F1, F2 is low.

The first echo reduction block 14 may further be configured to determine a third double-talk likelihood L3 (not shown) and/or a third double-talk confidence F3 (not shown) in dependence on two or more of the first double-talk likelihood L1, the second double-talk likelihood L2, the first double-talk confidence F1, and the second double-talk confidence F2. The first echo reduction block 14 may, e.g., be configured to determine the third double-talk likelihood L3 to be equal to one of the first double-talk likelihood L1 and the second double-talk likelihood L2, or, alternatively, to determine the third double-talk likelihood L3 as a weighted sum of the first double-talk likelihood L1 and the second double-talk likelihood L2. The first echo reduction block 14 may, e.g., be configured to determine the third double-talk confidence F3 to be equal to one of the first double-talk confidence F1 and the second double-talk confidence F2, or, alternatively, to determine the third double-talk confidence F3 as a weighted sum of the first double-talk confidence F1 and the second double-talk confidence F2. In these cases, the first echo reduction block 14 may further be configured to control the processing of the second microphone signal M2 in dependence on the third double-talk likelihood L3 and/or the third double-talk confidence F3.

Selecting, or weighing, the better suited of the first double-talk signal D1 and the second double-talk signal D2 in this way may enable the first echo reduction block 14 and the echo suppressor 10 to further reduce the echo portion relative to the near-end speech portion in the near-end speech signal TX, e.g., by facilitating the determination of when to shift from being dependent on the second double-talk signal D2 to being dependent on the first double-talk signal D1 at the onset of near-end speech in the second microphone signal M2.

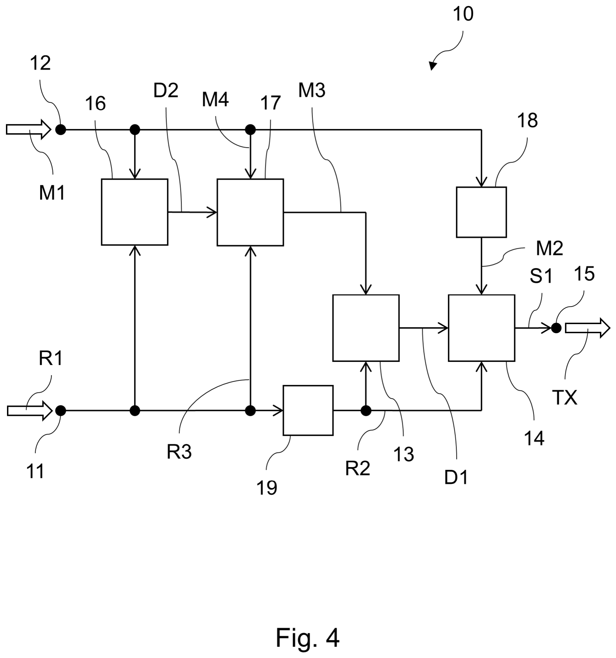

The echo suppressor 10 shown in FIG. 4 comprises all the components of the echo suppressor 10 shown in FIG. 3, and the corresponding description above applies to the echo suppressor 10 shown in FIG. 4, except for the differences stated below.

The echo suppressor 10 shown in FIG. 4 further comprises a second echo reduction block 17 connected to receive a third reference signal R3, a fourth microphone signal M4, and the second double-talk signal D2.

The third reference signal R3 is equal to the first reference signal R1 or is a signal derived therefrom, such as by filtering, delaying, or the like. The fourth microphone signal M4 is equal to the first microphone signal M1 or is a signal derived therefrom, such as by filtering, delaying, or the like.

The second echo reduction block 17 is configured to adaptively process the fourth microphone signal M4 based on the third reference signal R3 and in dependence on the second double-talk likelihood L2 to estimate a second echo-cancelled signal C2 (not shown, corresponds to C in FIG. 5). The second echo reduction block 17 is preferably configured to estimate the second echo-cancelled signal C2 in a manner suitable for reducing the echo portion in the second echo-cancelled signal C2 relative to the near-end speech portion when compared with the fourth microphone signal M4.

The second echo reduction block 17 may preferable be configured to halt or slow down adaptation of the processing of the fourth microphone signal M4 in dependence on an increase of the second double-talk likelihood L2, e.g., to prevent divergence of the adaptation in time periods wherein near-end speech SN from the local user 1 may obscure the acoustic feedback SE. Conversely, the second echo reduction block 17 may be configured to resume or speed up adaptation of the processing of the fourth microphone signal M4 in dependence on a decrease of the second double-talk likelihood L2.

In the case that the second double-talk detector 16 is configured to indicate the second likelihood L2 as an indication switching between e.g. 4, 8, 16, 32 or even more different likelihood levels, the second echo reduction block 17 may be configured to apply different speeds of adaptation of the processing of the fourth microphone signal M4 in dependence on different levels of the second double-talk likelihood L2.

The second echo reduction block 17 is, instead of the first echo reduction block 14, configured to provide the third microphone signal M3 based on the second echo-cancelled signal C2 and/or the second echo-suppressed signal S2 (not shown, corresponds to S in FIG. 5) as explained further below in the description of FIGs. 5, 6a, 6b, 7a and 7b. The third microphone signal M3 may thus be equal to - or be derived from - the second echo-cancelled signal C2 and/or the second echo-suppressed signal S2.

In this embodiment, the third microphone signal M3 is not based on any output from the first echo reduction block 14. The third microphone signal M3, and thus the first double-talk signal D1, is thus based neither on the first echo-cancelled signal C1 nor on the first echo-suppressed signal S1.

By providing the third microphone signal M3 based on the second echo-cancelled signal C2 and/or the second echo-suppressed signal S2 instead of on the first echo-cancelled signal C1 and/or the first echo-suppressed signal S1, the first double-talk signal D1 is not recursively dependent on itself which may help in preventing problems caused by instability of such a feedback loop.

Preferably, the echo suppressor 10 is configured to not include components of the second echo-cancelled signal C2 in the near-end speech signal TX, so that the third microphone signal M3 needs neither be intelligible to humans nor be pleasant to listen to. This relaxes the constraints on the configuration of the second echo reduction block 17 and may thus make it easier to configure the second echo reduction block 17 to provide the third microphone signal M3 in a more efficient and/or faster way, and/or in a way that makes it easier and/or faster for the first double-talk detector 13 to detect simultaneous presence of near-end speech and far-end speech in the first microphone signal M1. The second echo reduction block 17 may thus, e.g., be configured to comprise, implement or work with shorter filter lengths, simpler circuits, lower sample rates, lower signal frequencies, and/or lower bandwidth than the first echo reduction block 14.

When the local user 1 begins to speak while the remote participant 6 is speaking, there is a risk that the onset of double-talk, i.e., simultaneous near-end speech and far-end speech, in the first microphone signal M1 will be processed by the first echo reduction block 14 before the first double-talk signal D1 indicates the double-talk, which may lead to double-talk not being sufficiently suppressed in the near-end speech signal TX and/or to diverging of the adaptation of the processing in the first echo reduction block 14. To prevent this, the echo suppressor 10 may further comprise a first buffer 18 configured to delay the first microphone signal M1 by a first buffer delay to provide the second microphone signal M2. The second microphone signal M2 may thus be derived from the first microphone signal M1 by delaying.

The first buffer delay may be equal to the first effective processing delay, or it may be smaller than the first effective processing delay, depending on, e.g., a desired limit on the total processing delay from the first microphone signal M1 to the near-end speech signal TX for a particular implementation of the echo suppressor 10.

In embodiments of the echo suppressor 10 wherein the first echo reduction block 14 is configured to provide the third microphone signal M3, such as the embodiments shown in FIGs. 2 and 3, the first buffer 18 is preferably omitted to maintain a small first effective processing delay.

Correspondingly, the echo suppressor 10 may further comprise a second buffer 19 configured to delay the first reference signal R1 by a second buffer delay to provide the second reference signal R2. In this way, the reference inputs to the first echo reduction block 14 and/or the first double-talk detector 13 may be aligned in time with the second microphone signal M2. The second reference signal R2 may thus be derived from the first reference signal R1 by delaying.

The second buffer delay may be equal to the first buffer delay, or it may deviate therefrom, depending on, e.g., other delays in the components of the echo suppressor 10 and/or of a device comprising the echo suppressor 10.

In embodiments of the echo suppressor 10 wherein the first echo reduction block 14 is configured to provide the third microphone signal M3, such as the embodiments shown in FIGs. 2 and 3, the first double-talk detector 13 is preferably connected to receive the first reference signal R1 without delay, instead of the second reference signal R2, to maintain a small first effective processing delay. In such embodiments, the first buffer 18 is thus preferably omitted to maintain a small first effective processing delay.

In embodiments of the echo suppressor 10 wherein the second echo reduction block 17 is configured to provide the third microphone signal M3, such as the embodiment shown in FIG. 4, the first double-talk detector 13 may likewise be connected to receive the first reference signal R1. Alternatively, the first double-talk detector 13 may be connected to receive a delayed version of the first reference signal R1, such as the second reference signal R2. In some embodiments, the delayed version of the first reference signal R1 may be an intermediate signal (not shown) from the second buffer 19, such that the reference signal input to the first double-talk detector 13 is delayed by a third buffer delay that is smaller than the second buffer delay. The preferred choice of delay of the reference signal input to the first double-talk detector 13 depends on, e.g., processing delays in the first and second double-talk detectors 13, 16 and the first and second echo reduction blocks 14, 17.

The first echo reduction block 14 shown in FIGs. 2, 3 and 4, and the second echo reduction block 17 shown in FIG. 4, may each be implemented in various ways. FIG. 5 shows a first example of the implementation of the first and/or the second echo reduction block 14, 17.

The echo reduction block 14, 17 shown in FIG. 5 comprises an echo canceller 51 and a residual echo suppressor 52.

The echo canceller 51 is connected to receive a reference signal R, a microphone signal M, and a double-talk signal D indicating a double-talk likelihood L (not shown). The echo canceller 51 is configured to provide an echo-cancelled signal C as described below.

For the first echo reduction block 14, the reference signal R refers to the second reference signal R2, the microphone signal M refers to the second microphone signal M2, the double-talk signal D refers to the first double-talk signal D1, the double-talk likelihood L refers to the first double-talk likelihood L1, or the third double-talk likelihood L3, and the echo-cancelled signal C refers to the first echo-cancelled signal C1.

For the second echo reduction block 17, the reference signal R refers to the third reference signal R3, the microphone signal M refers to the fourth microphone signal M4, the double-talk signal D refers to the second double-talk signal D2, the double-talk likelihood L refers to the second double-talk likelihood L2, and the echo-cancelled signal C refers to the second echo-cancelled signal C2.

The echo canceller 51 is configured to adaptively process the microphone signal M based on the reference signal R to estimate an echo-cancelled signal C. The echo canceller 51 is preferably configured to estimate the echo-cancelled signal C in a manner suitable for reducing the echo portion in the echo-cancelled signal C relative to the near-end speech portion when compared with the microphone signal M. The echo canceller 51 is further configured to control the processing of the microphone signal M in dependence on the double-talk likelihood L.

The echo canceller 51 comprises an echo estimator 53 and a combiner 54.

The echo estimator 53 is configured to provide an echo signal E indicating an estimate of the echo portion of the microphone signal M based on the reference signal R, the echo-cancelled signal C and the double-talk signal D. The echo estimator 53 may e.g. comprise a controllable echo filter (not shown) that filters the reference signal R to provide the echo signal E.

The combiner 54 is configured to provide the echo-cancelled signal C by combining the microphone signal M and the echo signal E. The combiner 54 is configured to provide the echo-cancelled signal C in a manner suitable for reducing the echo portion in the echo-cancelled signal C relative to the near-end speech portion when compared with the microphone signal M.

The combiner 54 may be configured to combine the microphone signal M and the echo signal E by subtraction or addition, depending on the polarity of the signals M, E to combine. The combiner 54 may thus comprise, e.g., a subtractor (not shown) or an adder (not shown). The combiner 54 may, e.g., be configured to subtract the echo signal E from the microphone signal M and provide the resulting signal as the echo-cancelled signal C.

The echo canceller 51 may further comprise an estimator controller 55 configured to adaptively control the echo estimator 53 in dependence on the reference signal R, the echo-cancelled signal C and the double-talk signal D, preferably with the target to have the combiner 54 provide the echo-cancelled signal C such that its echo portion is reduced relative to its near-end speech portion when compared with the microphone signal M. The estimator controller 55 may, e.g., be configured to adaptively modify filter coefficients of the echo filter of the echo estimator 53. The estimator controller 55 is preferably further configured to halt or slow down adaptation of the echo estimator 53 in dependence on an increase of the double-talk likelihood L.

The ideal target for the estimator controller 55 is to control the transfer function of the echo estimator 53 such that it equals the transfer function of the acoustic echo all the way from the reference signal R, through the loudspeaker 7, the air in the room 1 and the microphone 8, to the microphone signal M. When, ideally, the estimator controller 55 succeeds in controlling the echo estimator 53 to provide the echo signal E such that it equals the echo portion of the microphone signal M, then, after the subtraction, by the combiner 54, of the echo signal E from the microphone signal M, only the near-end speech portion remains in the echo-cancelled signal C.

The estimator controller 55 may be configured to approach the ideal target by controlling the echo estimator 53 using one or more suitable algorithms known from the art within the field of acoustic echo cancellers. The estimator controller 55 may, e.g., be configured to control the echo estimator 53 using an algorithm targeted at minimizing the energy in the echo-cancelled signal C, such as a so-called Least Mean Squares (LMS) algorithm, or any of the known variants thereof or alternatives thereto.

The functioning of the echo canceller 51 described above is well known in the art and typically referred to as Acoustic Echo Cancelling (AEC), and it may further be characterized as "model-based" (see e.g. reference [1] cited at the end of the description).

However, model-based acoustic echo cancelling, such as described above, typically only works properly for direct feedback and early echoes, because the diffuse nature of reverberation makes it difficult or impossible to model the reverberation paths with sufficient accuracy, and because the filter length is typically limited, e.g., by constraints on the filter delay.

The art therefore suggests the use of a residual echo suppressor 52, also known as Acoustic Echo Suppressor (AES) or postfilter, that typically uses a time-frequency mask to filter the echo-cancelled signal C to remove signal components not properly removed by the echo canceller 51. The residual echo suppressor 52 may, e.g., be configured to remove or suppress signal components believed to not comprise near-end speech SN, which typically encompass both reverberation and background noise.

The residual echo suppressor 52 comprises a residual echo filter 56 and a filter controller 57.

The residual echo suppressor 52 is connected to receive the echo-cancelled signal C and is configured to process the echo-cancelled signal C to provide an echo-suppressed signal S based on the reference signal R and, optionally, the microphone signal M and/or the double-talk signal D.

For the first echo reduction block 14, the echo-suppressed signal S refers to the first echo-suppressed signal S1. For the second echo reduction block 17, the echo-suppressed signal S refers to the second echo-suppressed signal S2.

The residual echo filter 56 is configured to filter the echo-cancelled signal C to provide the echo-suppressed signal S.

The filter controller 57 is configured to adaptively control the residual echo filter 56 in dependence on the reference signal R, preferably in a manner suitable for reducing the echo portion in the echo-suppressed signal S relative to the near-end speech portion when compared with the echo-cancelled signal C.

The filter controller 57 may control the residual echo filter 56, e.g., by modifying filter coefficients of the residual echo filter 56 in a manner suitable for reducing a correlation between the echo-suppressed signal S and the reference signal R. The filter controller 57 may further be configured to control the residual echo filter 56 in further dependence on the microphone signal M, e.g., to prevent unnecessary or unwanted suppression of near-end speech in the echo-suppressed signal 1. The filter controller 57 may further be configured to control the residual echo filter 56 in further dependence on the double-talk signal D, e.g., to prevent divergence of the transfer function of the residual echo filter 56 caused by double-talk in the microphone signal M.

The residual echo filter 56 and the filter controller 57 may thus operate as a residual echo filter as known in the prior art.

The filter controller 57 may be configured to control the echo filter 56 using one or more suitable algorithms known from the prior art within the field of residual echo reduction. The target for the filter controller 57 is to control the transfer function of the echo filter 56 such that it removes or suppresses mainly residual echo, late reverberation and background noise without removing or suppressing too much of the near-end speech in the microphone signal M.

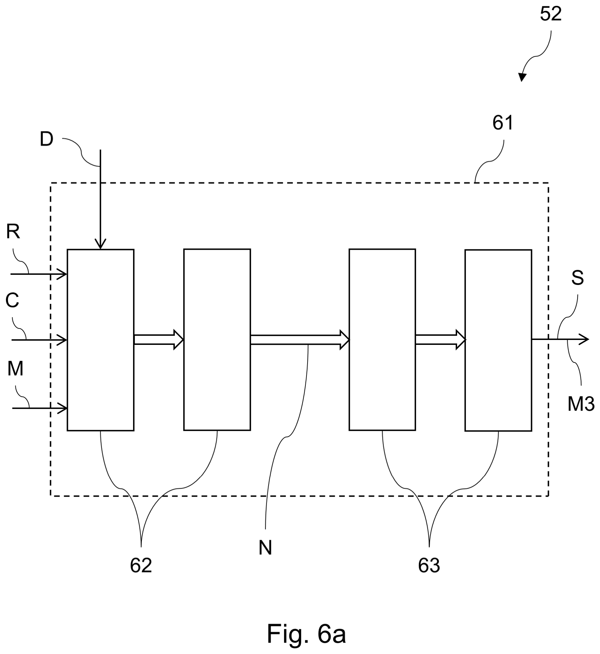

FIG. 6a shows an alternative embodiment of the residual echo suppressor 52 shown in FIG. 5.

Like in the embodiment described above, the residual echo suppressor 52 is connected to receive the echo-cancelled signal C and is configured to process the echo-cancelled signal C to estimate an echo-suppressed signal S based on the reference signal R and, optionally, the microphone signal M and/or the double-talk signal D. In machine learning, predicting, or estimating, a single signal (the echo-suppressed signal S) from a set of input signals (the echo-cancelled signal C, the reference signal R and, optionally, the microphone signal M and/or the double-talk signal D) is generally referred to as regression.

The residual echo suppressor 52 shown in FIG. 6a comprises a first machine learning model 61 with a first set of model layers 62 and a second set of model layers 63. The first machine learning model 61 is preferably configured to estimate the echo-suppressed signal S by regression from the echo-cancelled signal C, the reference signal R and, optionally, the microphone signal M and/or the double-talk signal D.

The first and second sets of model layers 62, 63 may each be implemented in various ways, and each set 62, 63 may comprise a single or multiple layers. The first and second sets of model layers 62, 63 preferably comprise at least three, four, or even more, model layers in total.

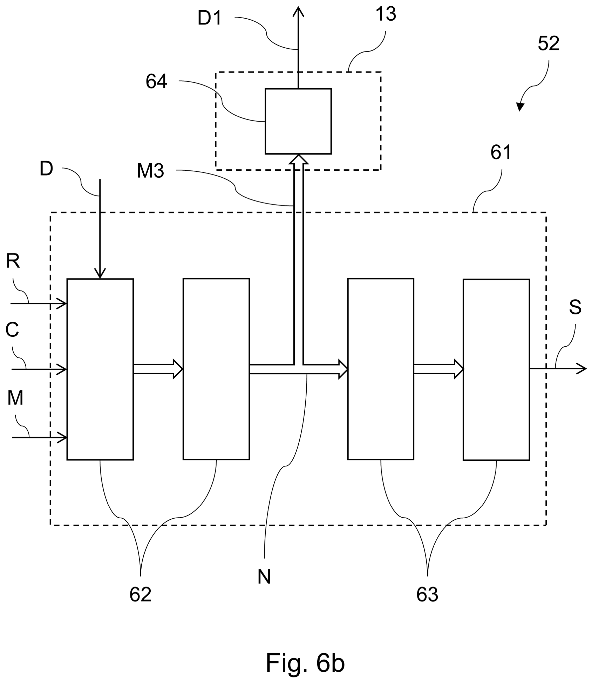

The first (leftmost in FIGs. 6a and 6b) layer of the first set of model layers 62 that receives the input signals C, R, M, and optionally D, is often referred to as an input layer or an encoder. This layer may preferably be configured as a Convolutional Neural Network (CNN) layer.

The last (rightmost in FIGs. 6a and 6b) layer of the second set of model layers 63 that provides the output signal S is often referred to as an output layer or a decoder. This layer may preferably be configured as a CNN layer.

The layers between the encoder and the decoder, such as the two middle layers shown in FIGs. 6a and 6b, are often referred to as hidden layers. These layers may preferably be configured as Recurrent Neural Network (RNN) layers, such as Gated Recurrent Units (GRU) layers and/or Long-term Short-Term Memory (LSTM) layers. In some embodiments, one or more such hidden layers may instead be configured as CNN layers.

Each layer may comprise one or more nodes (not shown), each receiving one or more external signals, such as the input signals C, R, M, D, and/or node output signals from the respective previous layer, and each providing a node output signal based on the received signals. The output layer typically has only one such node that provides the output signal of the first machine learning model 61, i.e., the echo-suppressed signal S.

The first set of model layers 62 is configured to provide an intermediate network signal N comprising node output signals of multiple layer nodes based on the echo-cancelled signal C and the reference signal R and, optionally, on the microphone signal M and/or the double-talk signal D, and the second set of model layers 63 is configured to provide the echo-suppressed signal S based on the intermediate network signal N. The intermediate network signal N may preferably comprise all node output signals of layer nodes in the last (rightmost in FIGs. 6a and 6b) layer of the first set of model layers 62.

The first machine learning model 61 is configured, preferably by deployment of an offline-trained model, to estimate the echo-suppressed signal S. The offline-trained model is preferably trained in a manner suitable for causing the first machine learning model 61 to generally reduce the echo portion in the echo-suppressed signal S relative to the near-end speech portion when compared with the echo-cancelled signal C. The deployment of an offline-trained model of the first machine learning model 61 may comprise selecting a model architecture and model parameters, establishing an offline model, training the offline model for regression as described below, and deploying the thus determined model to an inference model comprised by the residual echo suppressor 52. The inference model may, e.g., comprise a dedicated neural network circuit and/or a processor emulating the functions of the inference model by executing computer-readable instructions.

The offline training of the offline model of the first machine learning model 61 may comprise:
- obtaining training data sets comprising input data and target data based on acoustic simulation and/or measured data, wherein input data comprise multiple samples of respectively an echo-cancelled signal C, a reference signal R, optionally a microphone signal M, and optionally a double-talk signal D, and wherein target data comprise samples of clean near-end speech corresponding to the samples of the echo-cancelled signal C; and
- repeatedly applying training data sets as input to the offline model and adjusting weights of the offline model based on the deviation between an echo-suppressed signal S output by the offline model and the corresponding target data, wherein the adjustment is made such that the offline model generally converges towards providing the echo-suppressed signal S such that it matches the corresponding target data.

Alternatively, weights of the offline model may be adjusted based on other cost functions indicating a degree of match or mismatch between the echo-suppressed signal S and the corresponding target data. Many such cost functions and corresponding methods for adjusting weights of machine learning models are well known in the prior art.

In various embodiments of the echo suppressor 10, like the ones shown in FIGs. 2, 3 and 4, the first echo reduction block 14 may comprise a residual echo suppressor 52 as shown in FIG. 6a.

In some embodiments of the echo suppressor 10, wherein the first echo reduction block 14 further provides the third microphone signal M3, like the ones shown in FIGs. 2 and 3, the first echo reduction block 14 may be further configured to provide the third microphone signal M3 based on the echo-suppressed signal S. In some such embodiments, the third microphone signal M3 may be identical to the echo-suppressed signal S or comprise an indication of the echo-suppressed signal S.

In some embodiments of the echo suppressor 10, wherein the second echo reduction block 17 provides the third microphone signal M3, like the one shown in FIG. 4, the second echo reduction block 17 may be further configured to provide the third microphone signal M3 based on the echo-suppressed signal S. In some such embodiments, the third microphone signal M3 may be identical to the echo-suppressed signal S or comprise an indication of the echo-suppressed signal S.

FIG. 6b shows a further alternative embodiment of the residual echo suppressor 52 which is identical to the residual echo suppressor 52 shown in FIG. 6a, except for the differences stated below.

The residual echo suppressor 52 is further configured to provide the third microphone signal M3 based on the intermediate network signal N and not based on the second set of model layers 63. The third microphone signal M3 is thus neither dependent on the second set of model layers 63 nor on the echo-suppressed signal S. Skipping the second set of model layers 63 in the provision of the third microphone signal M3 may help reducing respectively the first or the second effective processing delay, depending on whether the residual echo suppressor 52 is comprised by the first echo reduction block 14 or by the second echo reduction block 17.

The residual echo suppressor 52 may be comprised by the first echo reduction block 14 in embodiments of the echo suppressor 10, wherein the first echo reduction block 14 provides the third microphone signal M3, like the ones shown in FIGs. 2 and 3. The residual echo suppressor 52 may be comprised by the second echo reduction block 17 in other embodiments of the echo suppressor 10, wherein the second echo reduction block 17 provides the third microphone signal M3, like the one shown in FIG. 4. In such other embodiments, the first machine learning model 61 of the residual echo suppressor 52 of the second echo reduction block 17 may further be configured to not comprise the second set of model layers 63 and thus to not provide the echo-suppressed signal S.

In embodiments of the echo suppressor 10 comprising the residual echo suppressor 52 shown in FIG. 6b for providing the third microphone signal M3, the first double-talk detector 13 may comprise a decoder 64 connected to receive the intermediate network signal N as the third microphone signal M3 and configured to provide the first double-talk likelihood L1 in dependence on the intermediate network signal N. In such embodiments, wherein further the first echo reduction block 14 comprises the residual echo suppressor 52 shown in FIG. 6b for providing the third microphone signal M3, the first double-talk detector 13 thus provides the first double-talk signal D1 in indirect dependence on the second reference signal R2, which is input to the first echo reduction block 14, and the direct connection of the second reference signal R2 to first double-talk detector 13 shown in FIGs 2 and 3 may be omitted.

The decoder 64 may preferably be configured by deployment of an offline-trained model to estimate the first double-talk likelihood L1 by regression from the intermediate network signal N. The deployment of an offline-trained model of the decoder 64 may be accomplished by performing the same steps as in the deployment of an offline-trained model of the first machine learning model 61. The model architecture may preferably be selected as a set of one or more consecutive model layers including the last (rightmost in FIGs. 6a and 6b) layer of the second set of model layers 63, and the training of the offline model of the decoder 64 may be executed in the same way as the training of the offline model of the first machine learning model 61, however, with the differences described below.

In the decoder 64, the first model layer receiving the intermediate network signal N may preferably be so-called Max-Pooling layer or another type of CNN layer, and the output layer may preferably be an RNN layer.

The offline training of the offline model of the decoder 64 may comprise:
- obtaining training data sets comprising input data and target data based on acoustic simulation and/or measured data, wherein input data comprise multiple samples of an intermediate network signal N, and wherein target data comprise an otherwise determined double talk likelihood corresponding to the samples of the intermediate network signal N; and
- repeatedly applying training data sets as input to the offline model and adjusting weights of the offline model based on the deviation between the double-talk likelihood L1 output by the offline model and the corresponding target data, wherein the adjustment is made such that the offline model generally converges towards providing the double-talk likelihood L1 such that it matches the corresponding target data.

Preferably, the trained offline model of the first machine learning model 61 may be employed to provide the intermediate network signal N needed as input data for training the offline model of the decoder 64.

Alternatively, weights of the offline model may be adjusted based on other cost functions indicating a degree of match or mismatch between the double-talk likelihood L1 and the corresponding target data.

Further options for configuring first machine learning model 61 shown in FIGs. 6a and 6b and/or the decoder 64 may be found in the prior art (see, e.g., references [2] and [3] cited at the end of the description).

The prior art also includes examples of deploying machine learning models, such as neural networks, in acoustic echo cancellers. Such examples may be characterized as "data-driven" acoustic echo cancellers, as opposed to model-based acoustic echo cancellers, or may constitute hybrid solutions wherein one or more machine learning models replace respective portions of otherwise model-based acoustic echo cancellers (see, e.g., reference [1] cited at the end of the description and the references [32]-[35] therein).

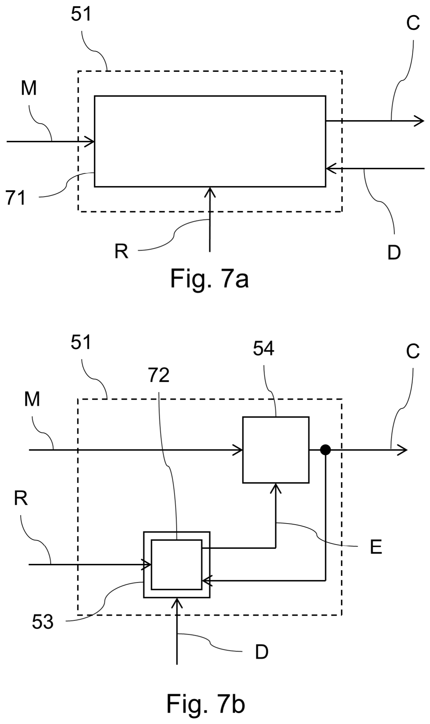

As shown in FIGs. 7a and 7b, one or more of the echo estimator 53, the combiner 54, and the estimator controller 55 comprised by the echo canceller 51 shown in FIG. 5 may be replaced with one or more machine learning models configured, preferably by deployment of an offline-trained model, to provide the respective output signals.

The echo canceller 51 shown in FIG. 7a comprises a second machine learning model 71 configured, preferably by deployment of an offline-trained model, to estimate the echo-cancelled signal C by regression from the reference signal R, the microphone signal M, and the double-talk signal D. In this echo canceller 51, the echo estimator 53, the combiner 54, and the estimator controller 55 are omitted.

The deployment of an offline-trained model of the second machine learning model 71 may be accomplished by performing the same steps as in the deployment of an offline-trained model of the first machine learning model 61, and the model architecture may preferably be selected as a set of three or more consecutive model layers including the first layer of the first set of model layers 62 and the last layer of the second set of model layers 63. The training of the offline model of the second machine learning model 71 may be executed in the same way as the training of the offline model of the first machine learning model 61, however, with the differences described below.

The offline training of the offline model of the second machine learning model 71 may comprise:
- obtaining training data sets comprising input data and target data based on acoustic simulation and/or measured data, wherein input data comprise multiple samples of respectively a reference signal R, a microphone signal M, and a double-talk signal D, and wherein target data comprise samples of clean near-end speech corresponding to the samples of the microphone signal M; and
- repeatedly applying training data sets as input to the offline model and adjusting weights of the offline model based on the deviation between an echo-cancelled signal C output by the offline model and the corresponding target data, wherein the adjustment is made such that the offline model generally converges towards providing the echo-cancelled signal C such that it matches the corresponding target data.

Alternatively, weights of the offline model may be adjusted based on other cost functions indicating a degree of match or mismatch between the echo-cancelled signal C and the corresponding target data.

In embodiments wherein the echo suppressor 10 is, or is intended to be, comprised by, implemented in, or embedded in, or otherwise connected to, a known embodiment of the first audio gateway device 3, acoustic characteristics of that embodiment of the first audio gateway device 3, such as an estimated or measured transfer function from the network input signal or the first reference signal R1 to the first microphone signal M1, are preferable taken into account in the obtaining of the input data of the training data sets for training the offline model of the second machine learning model 71, since this may substantially improve its prediction of the echo-cancelled signal C.

In the echo canceller 51 shown in FIG. 7b, the echo estimator 53 comprises a third machine learning model 72 configured, preferably by deployment of an offline-trained model, to estimate the echo signal E by regression from the reference signal R, the echo-cancelled signal C and the double-talk signal D. In this echo canceller 51, the third machine learning model 72 thus replaces an echo filter of the echo estimator 53 and the estimator controller 55.

The deployment of an offline-trained model of the third machine learning model 72 may be accomplished by performing the same steps as in the deployment of an offline-trained model of the first machine learning model 61, and the model architecture may preferably be selected as a set of three or more consecutive model layers including the first layer of the first set of model layers 62 and the last layer of the second set of model layers 63. The training of the offline model of the third machine learning model 72 may be executed in the same way as the training of the offline model of the first machine learning model 61, however, with the differences described below.

The offline training of the offline model of the third machine learning model 72 may comprise:
- obtaining training data sets comprising input data and target data based on acoustic simulation and/or measured data, wherein input data comprise multiple samples of respectively a reference signal R, an echo-cancelled signal C based on a combination of the reference signal R and a microphone signal M, and a double-talk signal D, and wherein target data comprise differences between the samples of the microphone signal M and samples of clean near-end speech corresponding to the respective samples of the microphone signal M; and
- repeatedly applying training data sets as input to the offline model and adjusting weights of the offline model based on the deviation between an echo signal E output by the offline model and the corresponding target data, wherein the adjustment is made such that the offline model generally converges towards providing the echo signal E such that it matches the corresponding target data.

Alternatively, weights of the offline model may be adjusted based on other cost functions indicating a degree of match or mismatch between the echo signal E and the corresponding target data.

In embodiments wherein the echo suppressor 10 is, or is intended to be, comprised by, implemented in, or embedded in, or otherwise connected to, a known embodiment of the first audio gateway device 3, acoustic characteristics of that embodiment of the first audio gateway device 3, such as an estimated or measured transfer function from the network input signal or the first reference signal R1 to the first microphone signal M1, are preferable taken into account in the obtaining of the input data of the training data sets for training the offline model of the third machine learning model 72, since this may substantially improve its prediction or estimation of the echo signal E.

Any of the first echo reduction block 14 and the second echo reduction block 17 may comprise an echo canceller 51 as shown in FIGs. 7a or 7b.

The echo canceller 51 shown in any of FIGs. 5, 7a and 7b may be comprised by the first echo reduction block 14 and/or the second echo reduction block 17.

Likewise, the residual echo suppressor 52 shown in any of FIGs. 5, 6a and 6b may be comprised by the first echo reduction block 14 and/or the second echo reduction block 17, e.g., to further suppress the echo portion in the near-end speech signal TX and/or the third microphone signal M3. If desired, the residual echo suppressor 52 may be omitted in any of the first echo reduction block 14 and the second echo reduction block 17, e.g., to reduce complexity or power consumption of the echo suppressor 10 and/or enable faster provision of the near-end speech signal TX and/or the third microphone signal M3. In this case, the respective first or second echo reduction block 14, 17 is configured to provide the echo-cancelled signal C as the echo-suppressed signal S.

In some embodiments of the echo suppressor 10 shown in FIG. 4, the second echo reduction block 17 may be configured to process the fourth microphone signal M4 with no, or less, adaptation of that processing. For instance, the echo canceller 51 may comprise an echo estimator 53 that applies a fixed echo filter to the fourth microphone signal M4, which may suffice to suppress direct acoustic feedback SE of far-end speech SF from the loudspeaker 7 to the microphone 8. A fixed filter may, e.g., be used in an echo suppressor 10 comprised by a device intended to operate at a distance to the local user 1, such as a speakerphone or soundbar intended to be mounted on a table or a wall, so that the acoustic path of direct acoustic feedback SE of far-end speech SF from the loudspeaker 7 to the microphone 8 is relatively stable. While such non-adaptive echo suppression may not provide substantial suppression of indirect feedback caused by early reflections of far-end speech SF, indirect feedback will generally have less impact than direct feedback on early detection of double-talk and may thus be tolerable.

In embodiments of the echo suppressor 10 wherein the echo estimator 53 of the second echo reduction block 17 applies a fixed echo filter to the fourth microphone signal M4, the echo canceller 51 of the second echo reduction block 17 may thus be configured to refrain from adapting its processing of the fourth microphone signal M4 in dependence on the second double-talk likelihood L2. If further, in such embodiments, the residual echo suppressor 52 of the second echo reduction block 17 is omitted, then the second echo reduction block 17 may be configured to refrain from adapting its processing of the fourth microphone signal M4 in dependence on the second double-talk likelihood L2, and the second double-talk detector 16 may then be omitted.

Generally, an echo canceller 51 and/or a residual echo suppressor 52 comprised by the first echo reduction block 14 may be optimized towards providing a clean and intelligible near-end speech signal TX, while an echo canceller 51 and/or a residual echo suppressor 52 comprised by the second echo reduction block 17 may be optimized towards enabling the first double-talk detector 13 to provide a reliable, fast and/or accurate first double talk signal D1.

For any component mentioned above that processes an input signal to provide a respective output signal, estimating or providing that output signal in a manner suitable for reducing the echo portion in that output signal relative to the near-end speech portion when compared with its input signal, may be achieved by using a known, model-based or data-driven, method for echo cancelling, echo reduction, and/or residual echo suppression. Many such methods exist in the prior art.

The described devices may be implemented using analog or digital circuits, or combinations hereof. Functional blocks of digital circuits may be implemented in hardware, firmware or software, or any combination hereof. Digital circuits may perform the functions of multiple functional blocks in parallel and/or in interleaved sequence, and functional blocks may be distributed in any suitable way among multiple hardware units, such as e.g. dedicated signal processors, neural network circuits, microcontrollers, and other integrated or discrete circuits.

Although various features have been shown and described, it will be understood that they are not intended to limit the claimed disclosure, and it will be obvious to those skilled in the art that various changes and modifications may be made without departing from the scope of the claimed invention.

### REFERENCES

[1] E. Seidel, G. Enzner, P. Mowlaee and T. Fingscheidt, "Neural Kalman Filters for Acoustic Echo Cancellation: Comparison of deep neural network-based extensions," in IEEE Signal Processing Magazine, vol. 41, no. 6, pp. 24-38, Nov. 2024.
[2] Z. Zhang, et al. "Two-step band-split neural network approach for full-band residual echo suppression", ICASSP 2023.
[3] Z. Chen, et al. "A progressive neural network for acoustic echo cancellation", ICASSP 2023.

## Claims

1. An echo suppressor (10) for use in two-way voice communication through a communication network (4) in a scenario wherein near-end speech (SN) from a local user (1) is picked up by a microphone (8) for transmission to a remote participant (6) and far-end speech (RX) received from the remote participant (6) is reproduced for the local user (1) by a loudspeaker (7), the echo suppressor comprising:
- a reference input (11) for receiving a first reference signal (R1) representative of far-end speech (RX) from the communication network (4);
- a microphone input (12) for receiving a first microphone signal (M1) from the microphone (8) comprising a near-end speech portion representative of near-end speech (SN) from the local user (1) and an echo portion representative of direct and/or indirect acoustic feedback (SE) of far-end speech (SF) from the loudspeaker (7) to the microphone (8);
- a first double-talk detector (13) configured to estimate a first double-talk likelihood (L1) being a likelihood of simultaneous presence of near-end speech and far-end speech in the first microphone signal (M1) and to provide a first double-talk signal (D1) indicating the first double-talk likelihood (L1);
- a first echo reduction block (14) connected to receive a second reference signal (R2) equal to or derived from the first reference signal (R1), a second microphone signal (M2) equal to or derived from the first microphone signal (M1), and the first double-talk signal (D1), wherein the first echo reduction block (14) is configured to adaptively process the second microphone signal (M2) based on the second reference signal (R2) to estimate a first echo-cancelled signal (C1), and wherein the first echo reduction block (14) is further configured to control the processing of the second microphone signal (M2) in dependence on the first double-talk likelihood (L1); and
- a near-end speech output (15) connected to receive a first echo-suppressed signal (S1) equal to or derived from the first echo-cancelled signal (C1), wherein the near-end speech output (15) is configured to provide a near-end speech signal (TX) comprising near-end speech for transmission to the communication network (4) based on the first echo-suppressed signal (S1),
**characterized in that**:
- the echo suppressor (10) is configured to estimate a third microphone signal (M3) based on the first microphone signal (M1) and the first reference signal (R1); and
- the first double-talk detector (13) is connected to receive the third microphone signal (M3) and is further configured to estimate the first double-talk likelihood (L1) in dependence on the first reference signal (R1) and the third microphone signal (M3).

2. An echo suppressor according to claim 1, further comprising a second double-talk detector (16) connected to receive the first reference signal (R1) and the first microphone signal (M1), wherein:
- the second double-talk detector (16) is configured to estimate a second double-talk likelihood (L2) being a likelihood of simultaneous presence of near-end speech and far-end speech in the first microphone signal (M1), based on the first reference signal (R1) and the first microphone signal (M1), and to provide a second double-talk signal (D2) indicating the second double-talk likelihood (L2);
- the first echo reduction block (14) is configured to control the processing of the second microphone signal (M2) in further dependence on the second double-talk likelihood (L2);
- a first effective processing delay is defined as the time it takes for an onset of double-talk in the first microphone signal (M1) to be indicated in the first double-talk signal (D1),
- a second effective processing delay is defined as the time it takes for an onset of double-talk in the first microphone signal (M1) to be indicated in the second double-talk signal (D2); and
- the first effective processing delay is larger than the second effective processing delay.

3. An echo suppressor according to claim 1 or 2, wherein the first echo reduction block (14) is further configured to:
- halt or slow down adaptation of the processing of the second microphone signal (M2) in dependence on an increase of the first double-talk likelihood (L1) and/or the second double-talk likelihood (L2); and/or
- resume or speed up adaptation of the processing of the second microphone signal (M2) in dependence on a decrease of the first double-talk likelihood (L1) and/or the second double-talk likelihood (L2).

4. An echo suppressor according to any preceding claim, wherein:
- the first double-talk detector (13) is further configured to estimate a first double-talk confidence (F1) being a confidence of the first double-talk likelihood (L1) and indicate the first double-talk confidence (F1) in the first double-talk signal (D1); and/or
- the second double-talk detector (16) is further configured to estimate a second double-talk confidence (F2) being a confidence of the second double-talk likelihood (L2) and indicate the second double-talk confidence (F2) in the second double-talk signal (D2),
and wherein the first echo reduction block (14) is further configured to control the processing of the second microphone signal (M2) in further dependence on the first double-talk confidence (F1) and/or the second double-talk confidence (F2).

5. An echo suppressor according to any of preceding claims 2-4, wherein the first echo reduction block (14) is configured to:
- determine a third double-talk likelihood (L3) in dependence on two or more of the first double-talk likelihood (L1), the second double-talk likelihood (L2), the first double-talk confidence (F1), and the second double-talk confidence (F2); and
- control the processing of the second microphone signal (M2) in dependence on the third double-talk likelihood (L3).

6. An echo suppressor according to any preceding claim, wherein the first echo reduction block (14) comprises a residual echo suppressor (52) comprising:
- a residual echo filter (56) configured to filter the first echo-cancelled signal (C1, C) to provide the first echo-suppressed signal (S1, S); and
- a filter controller (57) configured to adaptively control the residual echo filter (56) in dependence on the second reference signal (R2, R).

7. An echo suppressor according to claim 6, wherein the first echo reduction block (14) is configured to provide the third microphone signal (M3) based on the first echo-cancelled signal (C1, C) and/or the first echo-suppressed signal (S1, S) and on the second reference signal (R2, R).

8. An echo suppressor according to any of preceding claims 1-5, wherein the first echo reduction block (14) comprises an echo canceller (51) and a residual echo suppressor (52) comprising a first machine learning model (61) with a first set of model layers (62) and a second set of model layers (63), wherein:
- the echo canceller (51) is configured to process the second microphone signal (M2, M) based on the second reference signal (R2, R) to estimate the first echo-cancelled signal (C1, C);
- the first set of model layers (62) is configured to estimate an intermediate network signal (N) comprising output signals of multiple layer nodes based on the first echo-cancelled signal (C1, C) and the second reference signal (R2, R);
- the second set of model layers (63) is configured to estimate the first echo-suppressed signal (S1, S) based on the intermediate network signal (N); and
- the residual echo suppressor (52) is configured to provide the third microphone signal (M3) based on the intermediate network signal (N) and not based on the first echo-suppressed signal (S1, S).

9. An echo suppressor according to any of preceding claims 2-6, wherein:
- the second echo reduction block (17) is connected to receive a third reference signal (R3) equal to or derived from the first reference signal (R1), a fourth microphone signal (M4) equal to or derived from the first microphone signal (M1), and the second double-talk signal (D2);
- the second echo reduction block (17) is configured to process the fourth microphone signal (M4) based on the third reference signal (R3) and in dependence on the second double-talk likelihood (L2) to estimate a second echo-cancelled signal (C2, C); and
- the second echo reduction block (17) is configured to provide the third microphone signal (M3) based on the second echo-cancelled signal (C2, C) and the third reference signal (R3).

10. An echo suppressor according to claim 9, further comprising a first signal buffer (18) configured to provide the second microphone signal (M2) as a delayed version of the first microphone signal (M1) to at least partly compensate for the first effective processing delay.

11. An echo suppressor according to claim 10, further comprising a second signal buffer (19) configured to provide the second reference signal (R2) as a delayed version of the first reference signal (R1) to at least partly compensate for the first processing delay.

12. An echo suppressor according to any preceding claim, wherein the first echo reduction block (14) comprises an echo canceller (51) comprising a second machine learning model (71) configured to estimate the first echo-cancelled signal (C1, C) in dependence on the second reference signal (R2, R), the second microphone signal (M2, M), and the first double-talk signal (D1, D).

13. An echo suppressor according to any of preceding claims 1-11, wherein the first echo reduction block (14) comprises an echo canceller (51) comprising:
- an echo estimator (53) configured to provide an echo signal (E) indicating an estimate of the echo portion of the second microphone signal (M2, M) based on the second reference signal (R2, R), the first echo-cancelled signal (C1, C) and the first double-talk signal (D1, D); and
- a combiner (54) configured to provide the first echo-cancelled signal (C1, C) by combining the second microphone signal (M2, M) and the echo signal (E).

14. An echo suppressor according to claim 13, wherein:
- the echo canceller (51) further comprises an estimator controller (55) configured to adaptively control the echo estimator (53) in dependence on the second reference signal (R2, R), the first echo-cancelled signal (C1, C) and the first double-talk signal (D1, D), and
- the estimator controller (55) is further configured to halt or slow down adaptation of the echo estimator (53) in dependence on an increase of the first double-talk likelihood (L1, L).

15. An echo suppressor according to claim 13, wherein the echo estimator (53) comprises a third machine learning model (72) configured to estimate the echo signal (E) in dependence on the second reference signal (R2, R), the first echo-cancelled signal (C1, C) and the first double-talk signal (D1, D).
